# EUROPEAN PATENT APPLICATION

(11) **EP 1 516 912 A2**
(43) Date of publication of application: **23.03.2005**
(21) Application number: 04019043.1
(22) Date of filing: 11.08.2004
(51) Int. Cl.: C10M 161/00, C10M 167/00

(54) **Power transmitting fluids and additive compositions**

(30) Priority: 17.09.2003 US 664322
(71) Applicant: Afton Chemical Corporation, Richmond, VA 23219 (US)
(72) Inventor: Iyer, Ramnath N., Glen Allen VA 23059 (US); Ozbalik, Nubar, Midlothian VA 23113 (US); Tersigni, Samuel H., Glen Allen VA 23060 (US)
(74) Representative: Dunleavy, Kevin James

(57) **Abstract**

An additive composition and a power transmitting fluid including the additive composition having the following components: a dispersant, an antioxidant, an antifoam agent, and a dihydrocarbyl hydrogen phosphite. Power transmitting fluids may be formulated to have enhanced wear protection performance and enhanced anti-shudder durability by including additive compositions including the foregoing components.

## Description

This invention relates to methods of formulating power transmitting fluids and additive compositions having enhanced wear protection and anti-shudder durability. An additive of the present invention includes a dispersant, an antioxidant, an anti-foam agent, and a dihydrocarbyl hydrogen phosphite.

### Background

Automotive power transmission fluids are called upon to provide specific frictional properties under very demanding conditions of temperature and pressure. Changes in a fluid's frictional properties as a function of relative sliding speed, temperature, or pressure as a result of these conditions may cause performance degradation immediately noticeable to the vehicle operator. Such effects may include unacceptably long or short gear shifts, vehicle shudder or vibration, noise, and/or harsh shifts ("gear change shock"). Thus, there is a need for transmission fluids that undergo minimal frictional changes under conditions of high temperatures and pressures. Such fluids would minimize equipment and performance problems while maximizing the interval between fluid changes. By enabling smooth engagement of torque converter and shifting clutches, these fluids would minimize shudder, vibration, and/or noise, and in some cases improve fuel economy, over a longer fluid lifetime.

Friction modifiers are used in automatic transmission fluids to decrease friction between surfaces (e.g., the members of a torque converter clutch or a shifting clutch) at low sliding speeds. The result is a friction vs. velocity (µ-v) curve that has a positive slope, which in turn leads to smooth clutch engagements and minimizes "stick-slip" behavior (e.g., shudder, noise, and harsh shifts). Many conventional organic friction modifiers, however, are thermally unstable. Upon prolonged exposure to heat, these additives decompose, and the benefits they confer on clutch performance are lost.

### Summary of the Drawings

Figure 1 illustrates the results of the friction curves obtained from the Falex low speed friction apparatus for fresh and artificially aged (ISOT) oils of an embodiment described herein;
Figure 2 illustrate the results of the friction curves obtained from the Falex low speed friction apparatus for fresh and artificially aged (ISOT) oils of a comparative example described herein; and
Figure 3 illustrates the results of the friction curves obtained from the Falex Block-on-Ring test of an embodiment and a comparative example described herein.

### Detailed Description

An additive composition according to the present disclosure may have the following components: a dispersant, an antioxidant, an anti-foam agent, and a dihydrocarbyl hydrogen phosphite. The additive composition may be combined with a base oil to provide a power transmitting fluid. The additive composition acts as a phosphorous source for enhanced wear protection performance and also as a friction modifier for enhanced anti-shudder durability.

Embodiments of the present disclosure provide unexpected dual functionality of both enhanced wear protection and friction modification for anti-shudder durability and performance.

As used herein, a "power transmitting fluid" or "transmission fluid" may include a lubricant useful for contact with gears involved in the transmission of mechanical energy, including in transmissions with a slipping torque converter, a lock-up torque converter, a starting clutch, and/or one or more shifting clutches. Such transmissions may include a three-, four-, five-, six-, or seven-speed transmission, or a continuously variable transmission (chain, belt, or toroidal disk type). The fluids are also suitable for use in manual transmissions, including automated manual and dual-clutch transmissions. A power transmitting fluid or transmission fluid may include a finished fluid, i.e., a base oil combined with an additive composition.

Reference is made herein of the term "enhanced" in the context of wear protection performance and/or anti-shudder durability. The term "enhanced" means an improvement in performance and/or durability of a power transmitting fluid relative to a similar fluid that does not contain the additive composition described herein.

### A. Dispersant

The transmission fluid compositions of the present disclosure may contain at least one dispersant. The dispersant may comprise an ashless dispersant having basic nitrogen and/or at least one hydroxyl group in the molecule, such as a succinimide dispersant, succinic ester dispersant, succinic ester-amide dispersant, Mannich base dispersant, hydrocarbyl polyamine dispersant, or polymeric polyamine dispersant. The dispersants suitable for use also include non-phosphorus-containing dispersants, the phosphorus-containing dispersants described above as well as mixtures of phosphorus and non-phosphorus-containing dispersants.

Polyamine succinimides in which the succinic group contains a hydrocarbyl substituent containing at least 30 carbon atoms are described for example in U.S. Pat. Nos. 3,172,892; 3,202,678; 3,216,936; 3,219,666; 3,254,025; 3,272,746; and 4,234,435. The alkenyl succinimides may be formed by conventional methods such as by heating an alkenyl succinic anhydride, acid, acid-ester, acid halide, or lower alkyl ester with a polyamine containing at least one primary amino group. The alkenyl succinic anhydride may be made readily by heating a mixture of olefin and maleic anhydride to, for example, about 180-220 °C. The olefin may be a polymer or copolymer of a lower monoolefin such as ethylene, propylene, 1-butene, isobutene and the like and mixtures thereof. In one example, the source of alkenyl group is from polyisobutene having a gel permeation chromatography (GPC) number average molecular weight of up to about 10,000 or higher, or alternatively in the range of about 500 to about 2,500, or further alternatively in the range of about 800 to about 1,200.

As used herein the term "succinimide" is meant to encompass the completed reaction product from a reaction between one or more polyamine reactants and a hydrocarbon-substituted succinic acid or anhydride (or like succinic acylating agent), and is intended to encompass compounds wherein the product may have amide, amidine, and/or salt linkages in addition to the imide linkage of the type that results from the reaction of a primary amino group and an anhydride moiety.

Alkenyl succinic acid esters and diesters of polyhydric alcohols containing about 2 to about 20 carbon atoms and about 2 to about 6 hydroxyl groups can be used in forming the phosphorus-containing ashless dispersants. Representative examples are described in U.S. Pat. Nos. 3,331,776; 3,381,022; and 3,522,179. The alkenyl succinic portion of these esters corresponds to the alkenyl succinic portion of the succinimides described above.

Suitable alkenyl succinic ester-amides for forming the phosphorylated ashless dispersant are described for example in U.S. Pat. Nos. 3,184,474; 3,576,743; 3,632,511; 3,804,763; 3,836,471; 3,862,981; 3,936,480; 3,948,800; 3,950,341; 3,957,854; 3,957,855; 3,991,098; 4,071,548; and 4,173,540.

Hydrocarbyl polyamine dispersants that can be phosphorylated are generally produced by reacting an aliphatic or alicyclic halide (or mixture thereof) containing an average of at least about 40 carbon atoms with one or more amines, preferably polyalkylene polyamines. Examples of such hydrocarbyl polyamine dispersants are described in U.S. Pat. Nos. 3,275,554; 3,394,576; 3,438,757; 3,454,555; 3,565,804; 3,671,511; and 3,821,302.

In general, the hydrocarbyl-substituted polyamines are high molecular weight hydrocarbyl-N-substituted polyamines containing basic nitrogen in the molecule. The hydrocarbyl group typically has a number average molecular weight in the range of about 750 to about 10,000 as determined by GPC, more usually in the range of about 1,000 to about 5,000, and is derived from a suitable polyolefin. Some hydrocarbyl-substituted amines or polyamines are prepared from polyisobutenyl chlorides and polyamines having from about 2 to about 12 amine nitrogen atoms and from about 2 to about 40 carbon atoms.

Mannich polyamine dispersants which can be utilized in forming the phosphorylated ashless dispersant are a reaction product of an alkyl phenol, typically having a long chain alkyl substituent on the ring, with one or more aliphatic aldehydes containing from about 1 to about 7 carbon atoms (especially formaldehyde and derivatives thereof), and polyamines (especially polyalkylene polyamines). Examples of Mannich condensation products, and methods for their production are described in numerous U.S. Patents.

For example, hydrocarbon sources for preparation of the Mannich polyamine dispersants are those derived from substantially saturated petroleum fractions and olefin polymers, preferably polymers of mono-olefins having from about 2 to about 6 carbon atoms. The hydrocarbon source generally contains at least about 40 and preferably at least about 50 carbon atoms to provide substantial oil solubility to the dispersant. The olefin polymers having a GPC number average molecular weight between about 600 and about 5,000 are preferred for reasons of easy reactivity and low cost. However, polymers of higher molecular weight can also be used. Especially suitable hydrocarbon sources are isobutylene polymers.

Mannich base dispersants that may be used are Mannich base ashless dispersants formed by condensing about one molar proportion of long chain hydrocarbon-substituted phenol with from about 1 to about 2.5 moles of formaldehyde and from about 0.5 to about 2 moles of polyalkylene polyamine.

Polymeric polyamine dispersants suitable for preparing phosphorylated ashless dispersants are polymers containing basic amine groups and oil solubilizing groups (for example, pendant alkyl groups having at least about 8 carbon atoms). Such materials are illustrated by interpolymers formed from various monomers such as decyl methacrylate, vinyl decyl ether or relatively high molecular weight olefins, with aminoalkyl acrylates and aminoalkyl acrylamides. Examples of polymeric polyamine dispersants are set forth in U.S. Pat. Nos. 3,329,658; 3,449,250; 3,493,520; 3,519,565; 3,666,730; 3,687,849; and 3,702,300.

The dispersant may be added to a base oil or included in an additive package. The formulation of an additive composition may include about 0.4 wt. % to about 40 wt. % of dispersant. The formulation of a transmission fluid may include about 0.1 wt. % to about 10 wt. % of dispersant.

### B. Antioxidant

Suitable antioxidants may include phenolic antioxidants, aromatic amine antioxidants and sulfurized phenolic antioxidants, among others. Examples of phenolic antioxidants include 2,6-di-tert-butylphenol, liquid mixtures of tertiary butylated phenols, 2,6-di-tert-butyl-4-methylphenol, 4,4'- methylenebis(2,6-di-tert-butylphenol), 2,2'-methylenebis(4-methyl-6-tert-butylphenol), mixed methylene-bridged polyalkyl phenols, and 4,4'-thiobis(2-methyl-6-tert-butylphenol). N,N'-di-sec-butyl-p-phenylenediamine, 4-isopropylaminodiphenyl amine, phenyl-naphthyl amine, and ring-alkylated diphenylamines serve as examples of aromatic amine antioxidants. Other antioxidants may include the sterically hindered tertiary butylated phenols, the ring-alkylated diphenylamines and combinations thereof.

The antioxidant may be added to a base oil or included in an additive package. The formulation of an additive composition may include about 0.4 wt. % to about 12 wt. % of antioxidant. The formulation of a transmission fluid may include about 0.1 wt. % to about 3.0 wt. % of antioxidant.

### C. Anti-Foam Agent

Foam inhibitors form one type of inhibitor suitable for use as inhibitor components in the transmission fluids and additive compositions. These include silicones, polyacrylates, surfactants, wetting agents, and the like.. Combination of two or more of the listed anti-foam agents can be used to meet a targeted level of performance. One suitable acrylic defoamer material is PC-1244 (Monsanto Company).

The anti-foam agent may be added to a base oil or included in an additive package. The formulation of an additive composition may include about 0.04 wt. % to about 4.0 wt. % of anti-foam agent. The formulation of a transmission fluid may include about 0.01 wt. % to about 1.0 wt. % of anti-foam agent.

### D. Dihydrocarbyl Hydrogen Phosphite

Suitable dihydrocarbyl hydrogen phosphites (acid phosphite esters) may include dibutyl hydrogen phosphite, or dipentyl hydrogen phosphite, or di-2-ethylhexyl hydrogen phosphite, or dipalmityl hydrogen phosphite, or dilauryl hydrogen phosphite, or distearyl hydrogen phosphite, or dioleyl hydrogen phosphite, and other C₃-C₃₀ alkyl or alkenyl acid phosphites, or dicresyl hydrogen phosphite, and other C₆-C₃₀ aryl acid phosphites, and mixtures thereof. More generally, the dihydrocarbyl hydrogen phosphites have hydrocarbyl groups that may independently vary from about 10 to about 30 carbon atoms arranged linearly or in branched or iso-alkyl isomeric forms.

The dihydrocarbyl hydrogen phosphite may be added to a base oil or included in an additive package. The formulation of an additive composition may include about 0.04 wt. % to about 40 wt. % of dihydrocarbyl hydrogen phosphite. The formulation of a transmission fluid may include about 0.01 wt. % to about 10 wt. % of dihydrocarbyl hydrogen phosphite.

### E. Further Additive Components and Base Oil

The transmission fluids may further include one or more friction modifiers, viscosity index improvers, alkali metal detergents, alkaline-earth metal detergents, seal swell agents, corrosion inhibitors, copper corrosion inhibitors, sulfur and/or phosphorus-containing anti-wear/extreme pressure additives, lubricity agents, and dyes.

In selecting any of the foregoing optional additives, it is important to ensure that the selected component(s) is/are soluble or stably dispersible in the additive package and finished composition, are compatible with the other components of the composition, and do not interfere significantly with the performance properties of the composition, such as the friction, viscosity, and/or shear stability properties, needed or at least desired in the overall finished composition.

In general, the ancillary additive components are employed in the oils in minor amounts sufficient to improve the performance characteristics and properties of the base oil. The amounts will thus vary in accordance with such factors as the viscosity characteristics of the base oil employed, the viscosity characteristics desired in the finished fluid, the service conditions for which the finished fluid is intended, and the performance characteristics desired in the finished fluid. However, generally speaking, the following concentrations (weight percent) of the additional components (active ingredients) in the finished fluid are illustrative:

| | Example Range 1 | Example Range 2 |
|---|---|---|
| Friction Modifier(s) | 0-5.0 | 0-1.0 |
| Viscosity Index Improver | 0-20 | 0-10 |
| Seal swell agent | 0-30 | 0-20 |
| Rust inhibitor | 0-0.5 | 0.01-0.3 |
| Copper corrosion inhibitor | 0-1.5 | 0.01-0.05 |
| Anti-wear/extreme pressure | 0-1 | 0.25-1 |
| Lubricity agent | 0-1.5 | 0.5-1 |
| Dye | 0-0.05 | 0.015-0.035 |

It will be appreciated that the individual components employed can be separately blended into the base oil or can be blended therein in various sub-combinations, if desired. Moreover, such components can be blended in the form of separate solutions in a diluent. It is possible, to blend the additive components used in the form of a concentrate, as this simplifies the blending operations, reduces the likelihood of blending errors, and takes advantage of the compatibility and solubility characteristics afforded by the overall concentrate.

Additive concentrates can thus be formulated to contain some or all of the additive components and if desired, some of the base oil. In most cases, the additive concentrate will contain one or more diluents such as light mineral oils, to facilitate handling and blending of the concentrate. Thus concentrates containing up to about 50% by weight of one or more diluents or solvents can be used, provided the solvents are not present in amounts that interfere with the low and high temperature and flash point characteristics and the performance of the finished power transmission fluid composition. In this connection, the additive components utilized should be selected and proportioned such that an additive concentrate or package formulated from such components will have a flash point of about 170°C or above, or as a further example, a flash point of at least about 180°C or above, using the ASTM D-92 test procedure.

The base oils used in forming the transmission fluids can be any suitable natural or synthetic oil having the necessary viscosity properties for this usage. Natural oils include animal oils and vegetable oils (e.g., castor oil, lard oil etc.), liquid petroleum oils and hydrorefined, severely hydrotreated, iso-dewaxed, solvent-treated or acid-treated mineral lubricating oils of the paraffinic, naphthenic, and mixed paraffinic-naphthenic types. Oils of lubricating viscosity derived from coal or shale are also useful base oils. Synthetic lubricating oils suitable for use include one of any number of commonly used synthetic hydrocarbon oils, which include, but are not limited to, poly-alpha-olefins, synthetic esters, alkylated aromatics, alkylene oxide polymers, interpolymers, copolymers and derivatives thereof where the terminal hydroxyl groups have been modified by esterification, etherification, etc., esters of dicarboxylic acids and silicon-based oils. Thus, the base oil may be composed entirely of a natural oil such as a mineral oil of suitable viscosity or it may be composed entirely of a synthetic oil such as a poly-alpha-olefin oligomer of suitable viscosity. Likewise, the base oil may be a blend of natural and synthetic base oils provided that the blend has the requisite properties for use in the formation of a transmission fluid. Ordinarily, the base oil should have a kinematic viscosity in the range of about 1 to about 10 centistokes (cSt) at 100°C, or as a further example about 3 to about 8 cSt at 100°C. Exemplary transmission fluids used can be formulated without a viscosity index improver so as to possess a kinematic viscosity of at least about 4.0 cSt at about 100°C and a Brookfield viscosity of no more than about 50,000 cP, alternatively no more than about 30,000 cP, and further alternatively no more than about 20,000 cP, at about -40°C, or formulated using a viscosity index improver so as to possess a kinematic viscosity of at least about 5.0 cSt at 100°C, or for example, at least about 6.8 cSt at 100°C and a Brookfield viscosity of no more than about 20,000 cP at about -40°C.

### F. Examples

### 1. Extreme Pressure and Wear Protection

The Falex Extreme Pressure Test, more specifically, Palex Pin and Vee Block Test, consists of running a rotating steel journal at about 290 ±10 rpm against two stationary V-blocks immersed in the lubricant sample. Load is applied to the V-blocks in 250 lbf (1112 N) increments. Failure is indicated by breakage of the test pin or the inability to increase or maintain load.

A transmission oil, Oil A, was formulated to include 3.0 wt. % dispersant, 0.4 wt. % antioxidant, 0.07 wt. % anti-foaming agent, and 2.9 wt. % dioleyl hydrogen phosphate.

A reference oil, Reference 1, was identical to Oil A, except instead of the dioleyl hydrogen phosphite, a non-phosphorous-containing friction modifier was used at 3.5 wt. % of the finished fluid.

The following comparative results were obtained in Timken Wear and Falex EP Tests:

| **Sample** | **Timken Wear Av Scar (mm)** | **Falex EP (Pass Load, lb)** | |
|---|---|---|---|
| | | **100 °C** | **150 °C** |
| Oil A | 0.67 | 2500 | 1000 |
| Reference 1 | 1.01 | 500 | 300 |

These results demonstrate enhanced wear protection performance of the additive composition in the transmission oil of Oil A over the Reference 1.

### 2. Anti-Shudder Durability

### a. Steel on Paper Friction Durability

The Falex Block on Ring Test is a friction bench test used to measure the coefficient of friction of fluids in contact between a rotating steel (S10) ring and a stationary block, such that the area of contact forms a line. The stationary block contains a friction material of interest. The test is run at a given fluid temperature and a given load applied on the block. The coefficient of friction is measured as a function of increasing rotation speed up to a maximum speed of 0.53 m/sec followed by deceleration at the same rate to stationary position.

Transmission Oil B was formulated to contain 6.0 wt. % of a succinimide dispersant, 0.4 wt. % of an antioxidant, 0.07 wt. % of an anti-foam system, and 2.9 wt. % dioleyl hydrogen phosphite. Reference Oil 2 differed from Oil B only by having a non-phosphorous friction modifier at 3.5wt. % instead of dioleyl hydrogen phosphite.

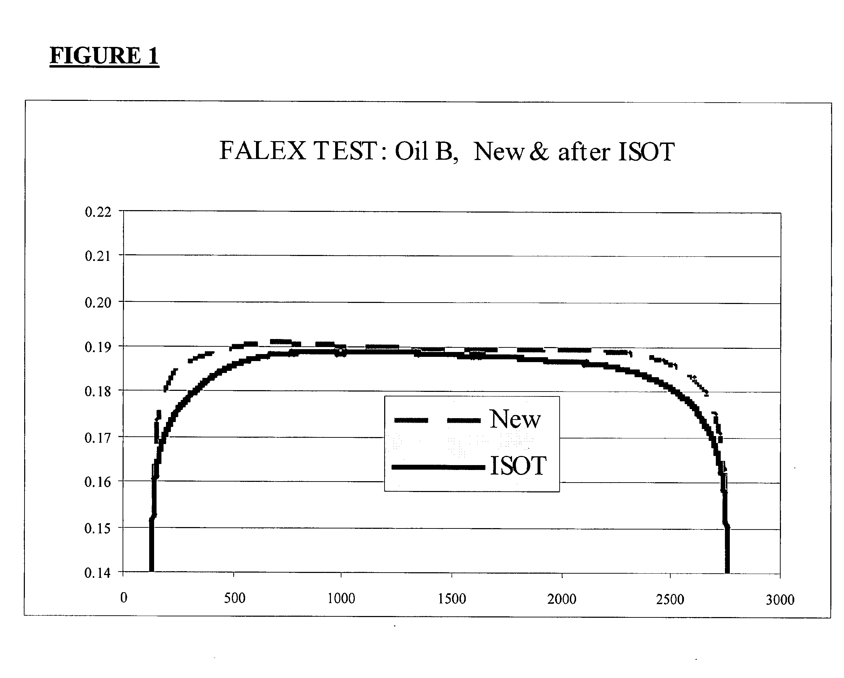

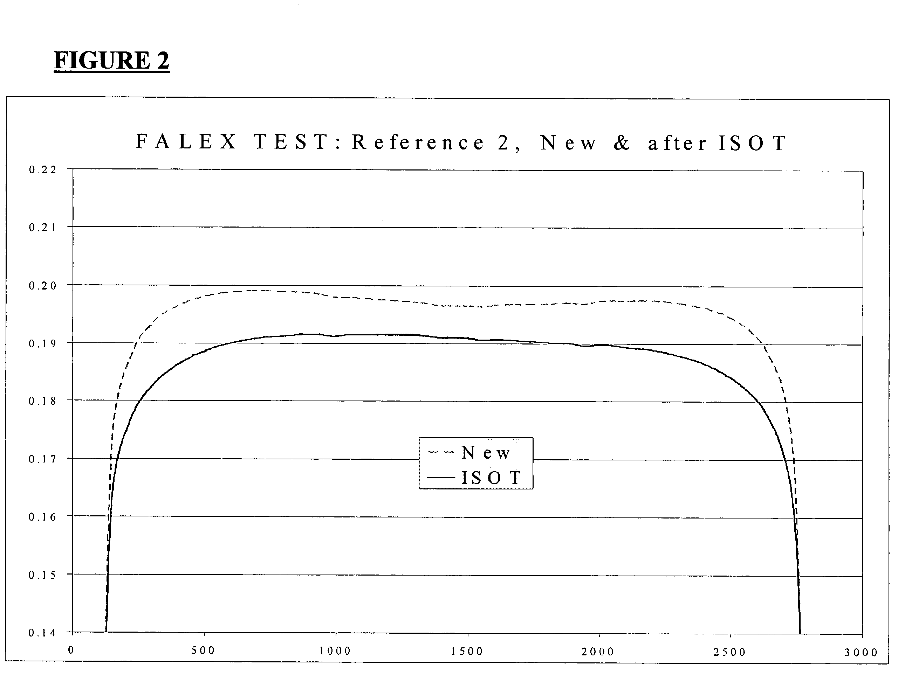

Figures 1 and 2 illustrate the results of the friction curves obtained from the Falex low speed friction apparatus for fresh and artificially aged (ISOT) oils. Test conditions used were as follows: Oil temperature: 90 °C; Load: 1000N; Acceleration: 0.01 m/s²; and Maximum speed: 0.537 m/s. These results demonstrate enhanced anti-shudder durability of the additive composition in Oil B over the Reference 2.

### b. Steel on Steel Friction Performance

The steel-on-steel friction properties of transmission fluids can be evaluated using the Falex Block-On-Ring test. The fluids of the present description were tested using the Falex Block-On-Ring test.

The load applied on the test block was 300N. Oil temperature was 40°C. Rate of acceleration to a max speed of 0.537 m/s was 0.01 m/s².

Transmission Oil C contained 0.5 wt. % antioxidant, 0.08 wt. % anti-foam system, and 0.95% dioleyl hydrogen phosphite, while the reference oil (Ref. 3) contained all of these components in the same quantities except dioleyl hydrogen phosphite.

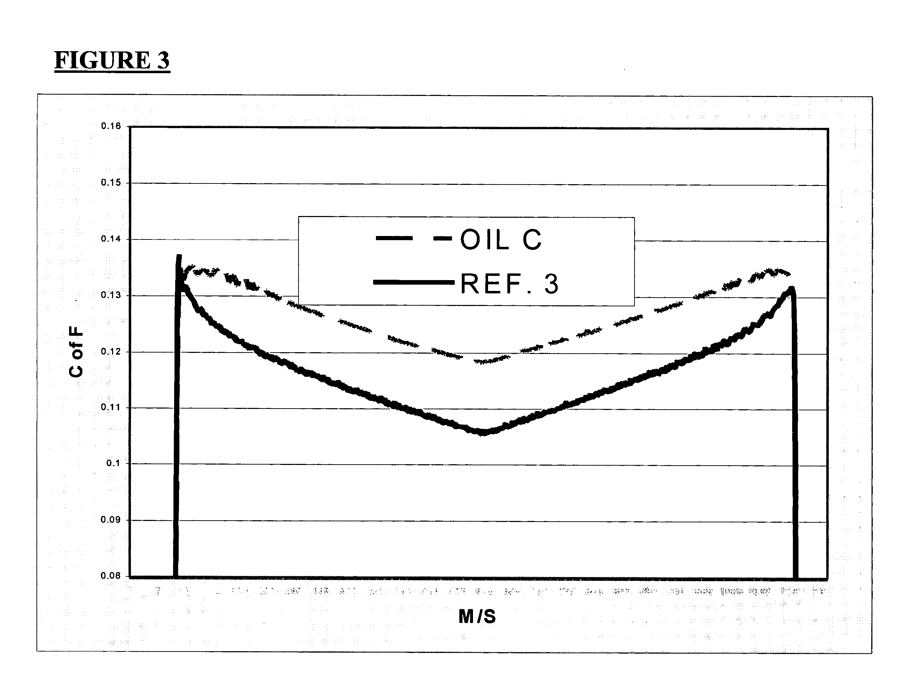

Figure 3 illustrates the results of the friction curves obtained from the Falex Block-on-Ring test. The mid-point of the curves shows friction at maximum speed is representative of dynamic coefficient of friction (µ_{dyn}), while friction at each end represents static coefficient of friction (µₛ). Thus, it is apparent from the graph that the ratio µₛ/µ_{dyn} for Oil C is lower than that of the reference oil. Thus, the foregoing example results again demonstrate enhanced anti-shudder performance of the additive composition in Oil C over the Reference 3.

It is to be understood that the reactants and components referred to by chemical name anywhere in the specification or claims hereof, whether referred to in the singular or plural, are identified as they exist prior to coming into contact with another substance referred to by chemical name or chemical type (e.g., base fuel, solvent, etc.). It matters not what chemical changes, transformations and/or reactions, if any, take place in the resulting mixture or solution or reaction medium as such changes, transformations and/or reactions are the natural result of bringing the specified reactants and/or components together under the conditions called for pursuant to this disclosure. Thus the reactants and components are identified as ingredients to be brought together either in performing a desired chemical reaction (such as formation of the organometallic compound) or in forming a desired composition (such as an additive concentrate or additized fuel blend). It will also be recognized that the additive components can be added or blended into or with the base oils individually per se and/or as components used in forming preformed additive combinations and/or sub-combinations. Accordingly, even though the claims hereinafter may refer to substances, components and/or ingredients in the present tense ("includes", "is", etc.), the reference is to the substance, components or ingredient as it existed at the time just before it was first blended or mixed with one or more other substances, components and/or ingredients in accordance with the present disclosure. The fact that the substance, components or ingredient may have lost its original identity through a chemical reaction or transformation during the course of such blending or mixing operations or immediately thereafter is thus wholly immaterial for an accurate understanding and appreciation of this disclosure and the claims thereof.

At numerous places throughout this specification, reference has been made to a number of U.S. Patents, published foreign patent applications and published technical papers. All such cited documents are expressly incorporated in full into this disclosure as if fully set forth herein.

This invention is susceptible to considerable variation in its practice. Therefore the foregoing description is not intended to limit, and should not be construed as limiting, the invention to the particular exemplifications presented hereinabove. Rather, what is intended to be covered is as set forth in the ensuing claims and the equivalents thereof permitted as a matter of law.

## Claims

1. A method of formulating a power transmitting fluid including the steps of:
providing a major amount of a base oil;
providing a minor amount of an additive composition including a) a dispersant, b) an antioxidant, c) an anti-foam agent, and d) a dihydrocarbyl hydrogen phosphite;
combining the major amount of base oil with the minor amount of additive composition to form a power transmitting fluid;
wherein the power transmitting fluid has at least one of enhanced wear protection performance and enhanced anti-shudder durability, as compared to a power transmitting fluid that does not include the additive composition.

2. A method of formulating a power transmitting fluid as claimed in claim 1, wherein the power transmitting fluid includes 0.1 to 10 wt. % of dispersant, based on the total weight of the power transmitting fluid.

3. A method of formulating a power transmitting fluid as claimed in any one of claims 1-2, wherein the power transmitting fluid includes 0.1 to 3.0 wt. % of the antioxidant, based on the total weight of the power transmitting fluid.

4. A method of formulating a power transmitting fluid as claimed in any one of claims 1-3, wherein the power transmitting fluid includes 0.01 to 1.0 wt. % of the anti-foam agent, based on the total weight of the power transmitting fluid.

5. A method of formulating a power transmitting fluid as claimed in any one of claims 1-4, wherein the power transmitting fluid includes 0.01 to 10 wt. % of the dihydrocarbyl hydrogen phosphite, based on the total weight of the power transmitting fluid.

6. A method of formulating a power transmitting fluid as claimed in any one of claims 1-5, wherein the additive composition further includes one or more components selected from a sulfur-based extreme pressure additive, a friction modifier, an anti-rust package, a viscosity index improver, a detergent, and a diluent oil.

7. A method of formulating a power transmitting fluid as claimed in any one of claims 1-6, wherein the dihydrocarbyl hydrogen phosphite includes hydrocarbonyl groups, each said hydrocarbonyl group being independently selected from hydrocarbonyl groups having 10 to 30 carbon atoms that are arranged linearly, branched, or in iso-alkyl isomeric forms.

8. A method of formulating a power transmitting fluid as claimed in any one of claims 1-8, wherein the dihydrocarbyl hydrogen phosphite includes dioleyl hydrogen phosphite.

9. A method of formulating a power transmitting fluid as claimed in any one of claims 1-8, wherein the power transmitting fluid has enhanced anti-shudder durability, as compared to a power transmitting fluid that does not include the additive composition.

10. A method of formulating a power transmitting fluid as claimed in any one of claims 1-8, wherein the power transmitting fluid has enhanced wear protection, as compared to a power transmitting fluid that does not include the additive composition.

11. A method of formulating a power transmitting fluid as claimed in any one of claims 1-10, wherein the fluid is suitable for use in a transmission employing one or more of a slipping torque converter, a lock-up torque converter, a starting clutch, and one or more shifting clutches.

12. A method of formulating a power transmitting fluid as described in claim 11, wherein the fluid is suitable for use in a belt, chain, or disk-type continuously variable transmission.

13. A power transmitting fluid additive composition including:
a dispersant;
an antioxidant;
an anti-foam agent; and
a dihydrocarbyl hydrogen phosphite.

14. A power transmitting fluid additive composition as claimed in claim 13, wherein the additive composition includes 0.4 to 40 wt. % of the dispersant, based on the total weight of the additive composition.

15. A power transmitting fluid additive composition as claimed in any one of claims 13-14, wherein the additive composition includes 0.4 to 12 wt. % of the antioxidant, based on the total weight of the additive composition.

16. A power transmitting fluid additive composition as claimed in any one of claims 13-15, wherein the additive composition includes 0.04 to 4.0 wt. % of the anti-foam agent, based on the total weight of the additive composition.

17. A power transmitting fluid additive composition as claimed in any one of claims 13-16, wherein the additive composition includes 0.04 to 40 wt. % of the dihydrocarbyl hydrogen phosphite, based on the total weight of the additive composition.

18. A power transmitting fluid additive composition as claimed in any one of claims 13-17, wherein the additive composition further includes one or more components selected from a sulfur-based extreme pressure additive, a friction modifier, an anti-rust package, a viscosity index improver, a detergent, and a diluent oil.

19. A power transmitting fluid additive composition as claimed in any one of claims 13-18, wherein the dihydrocarbyl hydrogen phosphite includes hydrocarbonyl groups, each said hydrocarbonyl group being independently selected from hydrocarbonyl groups having 10 to 30 carbon atoms that are arranged linearly, branched, or in iso-alkyl isomeric forms.

20. A power transmitting fluid additive composition as claimed in any one of claims 13-19, wherein the dihydrocarbyl hydrogen phosphite includes dioleyl hydrogen phosphite.

21. A power transmitting fluid additive composition as claimed in any one of claims 13-21, wherein the additive composition is suitable for use in a transmission employing one or more of a slipping torque converter, a lock-up torque converter, a starting clutch, and one or more shifting clutches.

22. A power transmitting fluid additive composition as claimed in claim 21, wherein the additive composition is suitable for use in a belt, chain, or disk-type continuously variable transmission.

23. A power transmitting fluid including:
a base oil; and
an additive composition as claimed in any one of claims 13-22.
